# EUROPÄISCHE PATENTANMELDUNG

(11) **EP 2 103 836 A2**
(43) Veröffentlichungstag der Anmeldung: **23.09.2009**
(21) Anmeldenummer: 09154689.5
(22) Anmeldetag: 10.03.2009
(51) Int. Cl.: F16F 9/48, F16F 9/50

(54) **Schwingungsdämpfer mit amplitudenselektiver Dämpfkraft**

(30) Priorität: 15.03.2008 DE 102008014543
(71) Anmelder: ZF Friedrichshafen AG, 88038 Friedrichshafen (DE)
(72) Erfinder: Hammer, Thomas, 97653, Bischofsheim (DE)

(57) **Zusammenfassung**

Schwingungsdämpfer, umfassend einen Zylinder (3), in dem eine Kolbenstange (5) axial beweglich geführt ist, wobei die Kolbenstange mit einem Kolben (7) verbunden ist, der den Zylinder in einen kolbenstangenfernen und einen kolbenstangenseitigen Arbeitsraum (13,15) unterteilt, wobei im kolbenstangenseitigen Arbeitsraum (13) auf der Kolbenstange ein Ventilring (39) gleitend gelagert ist, der in Abhängigkeit seiner Axialposition eine Ventilöffnung zum Abfluss von Dämpfmedium in ihrem Querschnitt beeinflusst, wobei im kolbenstangenseitigen Arbeitsraum eine Ventilhülse (23) angeordnet ist, in der der Ventilring (39) axial beweglich geführt ist, der zwei Arbeitskammern (41,43) innerhalb der Ventilhülse (23) begrenzt, wobei der kolbenstangenseitige Arbeitsraum und der kolbenstangenferne Arbeitsraum jeweils mit einer Arbeitskammer der Ventilhülse über mindestens einen über ein Rückschlagventil (81,83) gesteuerten Kanal (85,87) verbunden sind und der Ventilring jeweils eine Ventilöffnung (105,107) zwischen einem Kanal und einer darin mündenden Arbeitskammer ansteuert.

## Beschreibung

Die Erfindung betrifft einen Schwingungsdämpfer mit amplitudenselektiver Dämpfkraft gemäß dem Oberbegriff von Patentanspruch 1.

Aus der DE 39 14 298 C1 ist ein hydraulischer Schwingungsdämpfer mit einer Kolbenstange bekannt, die zusammen mit einem Kolben in einem Zylinder axial beweglich geführt ist. Der Kolben unterteilt den Zylinder in einen kolbenstangenseitigen und einen kolbenstangenfernen Arbeitsraum, die beide mit einem Dämpfmedium gefüllt sind. Im kolbenstangenseitigen Arbeitsraum ist auf der Kolbenstange ein Ventilring gleitend angeordnet, der durch seine Axialposition eine Ventilöffnung in ihrem Querschnitt ansteuert. Der Ventilring steht über eine Dichtung in Kontakt mit der Kolbenstange. In Abhängigkeit des Drucks im kolbenstangenfernen Arbeitsraum führt der Ventilring bei einer Hubbewegung der Kolbenstange eine Axialbewegung aus. Dabei kann Dämpfvolumen aus dem kolbenstangenseitigen Arbeitsraum abfließen, bis der Ventilring nach einem definierten Hubweg die Ventilöffnung verschließt. Die DE 39 14 298 C1 beschreibt lediglich eine Prinziplösung, die nur bei einer Kolbenstangenausfahrbewegung eine Dämpfkraftersteuerung bewirkt.

Die WO 2006/049 741 A1 betrifft einen Schwingungsdämpfer mit amplitudenabhängiger Dämpferkraft. Auf einer Kolbenstange ist ein axial beweglicher Ventilring geführt, der mittels Reibkontakt zur innenwandung eines Zylinders in seiner Position verstellt wird und damit eine Strömungsverbindung zwischen zwei Arbeitsräumen ansteuert.

Die Aufgabe der vorliegenden Erfindung besteht darin, einen Schwingungsdämpfer mit amplitudenselektiver Dämpfkraft sowohl bei einer Kolbenstangeneinfahr- und einer Kolbenstangenausfahrbewegung zu realisieren.

Erfindungsgemäß wird die Aufgabe dadurch gelöst, dass im kolbenstangenseitigen Arbeitsraum eine Ventilhülse angeordnet ist, in der der Ventilring axial beweglich geführt ist, der zwei Arbeitskammern innerhalb der Ventilhülse begrenzt, wobei der kolbenstangenseitige Arbeitsraum und der kolbenstangenferne Arbeitsraum jeweils mit einer Arbeitskammer der Ventilhülse über mindestens einen über ein Rückschlagventil gesteuerten Kanal verbunden sind und der Ventilring jeweils eine Ventilöffnung zwischen einem Kanal und einer darin mündenden Arbeitskammer ansteuert.

Durch die Anbindung der Ventilhülse an beide Arbeitsräume des Schwingungsdämpfers wird die Dämpfkraft amplitudenselektiv sowohl bei einer Einfahr- wie auch bei einer Ausfahrbewegung verändert.

In weiterer vorteilhafter Ausgestaltung bildet der Zylinder mit einem äußeren Rohrkörper eine Fluidverbindung, die einen der Arbeitsräume mit einer Arbeitskammer in der Ventilhülse verbindet. Die Fluidverbindung besteht damit aus sehr einfachen Bauteilen und kann vergleichsweise große Volumenströme aufnehmen.

Zur Unterstützung der Sperrwirkung des Ventilkörpers in der Ventilhülse ist den Kanälen jeweils eine Bypassverbindung mit einer Drosseleinrichtung zugeordnet. Der Druck in der mit dem Arbeitsraum verbundenen Arbeitkammer der Ventilhülse wird über die Drosseleinrichtung auf ein gewünschtes Maß abgesenkt, so dass die auf den Ventilkörper wirkende Schließkraft von der Reibkraft mit der Kolbenstange und dem Druck in der Ventilhülse bestimmt wird.

Die Bypassverbindung und der mindestens eine Kanal sind über einen Vorraum miteinander verbunden, wobei zwischen dem Vorraum und der Bypassverbindung die Drosseleinrichtung angeordnet ist. Mit nur einer Anschlussöffnung zum Vorraum werden der mindestens eine Kanal und auch die Bypassverbindung mit Dämpfmedium aus einem Arbeitsraum versorgt.

In weiterer vorteilhafter Ausgestaltung wird die Drosseleinrichtung über einen durch die Bewegung der Kolbenstange reibkraftbetätigten Schaltring angesteuert. Je nach Bewegungsrichtung der Kolbenstange und damit Strömungsrichtung des Dämpfmediums kann die Drosseleinrichtung zu einer relativ ungedrosselt Durchströmungsöffnung oder zu einer Drosselstelle geschaltet werden.

Der Vorraum in Abflussrichtung weist zum benachbarten Arbeitsraum eine zweite Drosseleinrichtung auf. Es steht mit der zweiten Drosseleinrichtung ein konstanter Querschnitt zur Verfügung, der die Dämpfkraft bei niedriger Kolbenstangengeschwindigkeit innerhalb des amplitudenselektiven Hubs bestimmt. Daraus folgt, dass dann die Dämpfkraft nicht praktisch aufgehoben ist, sondern noch eine Mindestdämpfkraft zur Verfügung steht.

Um auf relativ beengtem Bauraum ein Rückschlagventil in den Kanälen ausführen zu können, sind die Kanäle als kombinierte Axial-Radialkanäle in der Ventilhülse ausgeführt, wobei an einem Übergang von einem Radial- zu einem Axialkanal das Rückschlagventil in Form eines elastischen Bandes ausgeführt ist.

Um die Kanäle möglichst einfach herstellen zu können, wird ein Teilabschnitt des Kanals von einer Mantelfläche der Ventilhülse und einem die Ventilhülse umschließenden Zylinderabschnitt gebildet.

Im Hinblick auf einen möglichst geringen Montageaufwand ist die Ventilhülse bezogen auf eine Querachse spiegelbildlich ausgeführt. Man muss keine besondere Einbaurichtung für die Ventilhülse im Schwingungsdämpfer vorsehen.

Anhand der folgenden Figurenbeschreibung soll die Erfindung näher erläutert werden.

Es zeigt:
- Fig. 1: Schwingungsdämpfer im Längsschnitt
- Fig. 2: Detailansicht der Ventilhülse bei Kolbenstangenausfahrbewegung
- Fig. 3: Weitere Schnittdarstellung zur Fig. 2
- Fig. 4: Detailansicht der Ventilhülse bei Kolbenstangeneinfahrbewegung

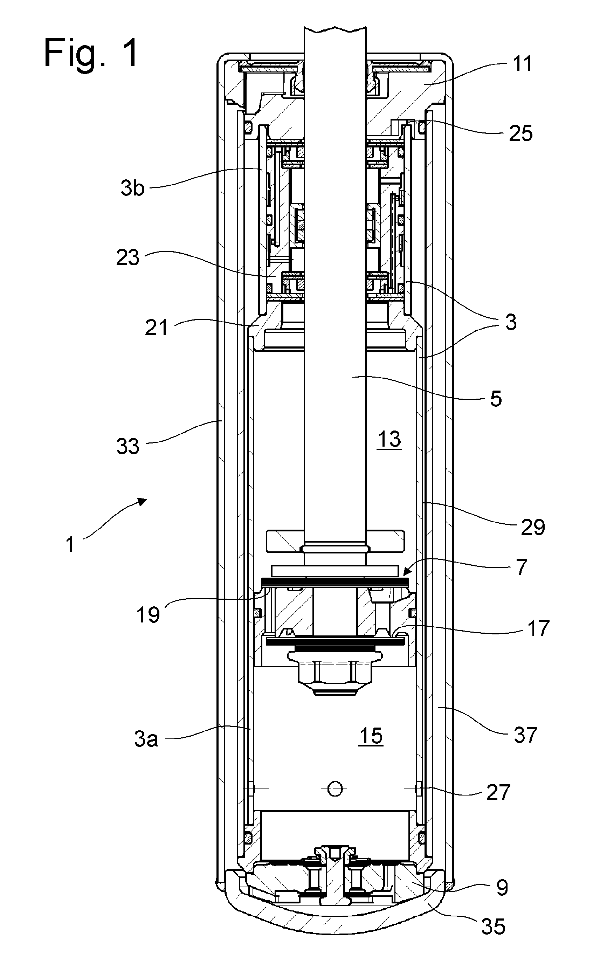

Die Figur 1 zeigt einen Schwingungsdämpfer 1 nach dem Bauprinzip eines Zweirohraggregats, wobei die Erfindung ohne Einschränkung auch bei einer anderen Bauform einsetzbar ist. In einem Zylinder 3 ist eine Kolbenstange 5 mit einem Kolben 7 axial beweglich angeordnet. Ein Bodenventil 9 begrenzt den Zylinder 3 endseitig. Am entgegengesetzten Ende dient eine Kolbenstangenführung 11 als Verschluss. An dem Kolben 7, der den vollständig mit Dämpfmedium gefüllten Zylinder 3 in einen kolbenstangenseitigen und einen kolbenstangenfernen Arbeitsraum 13; 15 unterteilt, sind Dämpfventile 17; 19 in an sich bekannter Bauweise für beide Bewegungsrichtungen der Kolbenstange 5 ausgeführt. Der Zylinder umfasst einen ersten Abschnitt 3a, dessen innenwandung als Gleitbahn für den Kolben 7 dient und über einen mittels Adapterring 21 gekoppelten zweiten Zylinderabschnitt 3b, in dem eine Ventilhülse 23 angeordnet ist, die der Erzeugung einer amplitudenselektiven Dämpfkraft des Schwingungsdämpfers 1 dient. Die Ventilhülse 23 ist axial zwischen dem Adapterring 21 und der Kolbenstangenführung 11 verspannt.

Über einen Spalt 25 in der Kolbenstangenführung 11 und einer Verbindungsöffnung 27 knapp oberhalb des Bodenventils 9 sind beide Arbeitsräume 13; 15 des Zylinders 3 über eine Fluidverbindung 29 verbunden. Die Fluidverbindung 29 wird von der Außenwandung des Zylinders 3 und einem äußeren Rohrkörper 31 gebildet. Konzentrisch zum Rohrkörper 31 ist noch ein äußeres Behälterrohr 33 mit einem Boden 35 und der Kolbenstangenführung 11 verbunden, wobei sich zwischen dem Rohrkörper 31 und dem Behälterrohr 33 ein nur teilweise mit Dämpfmedium gefüllter Ausgleichsraum 37 erstreckt, der über das Bodenventil 9 mit dem kolbenstangenfernen Arbeitsraum 15 verbunden ist.

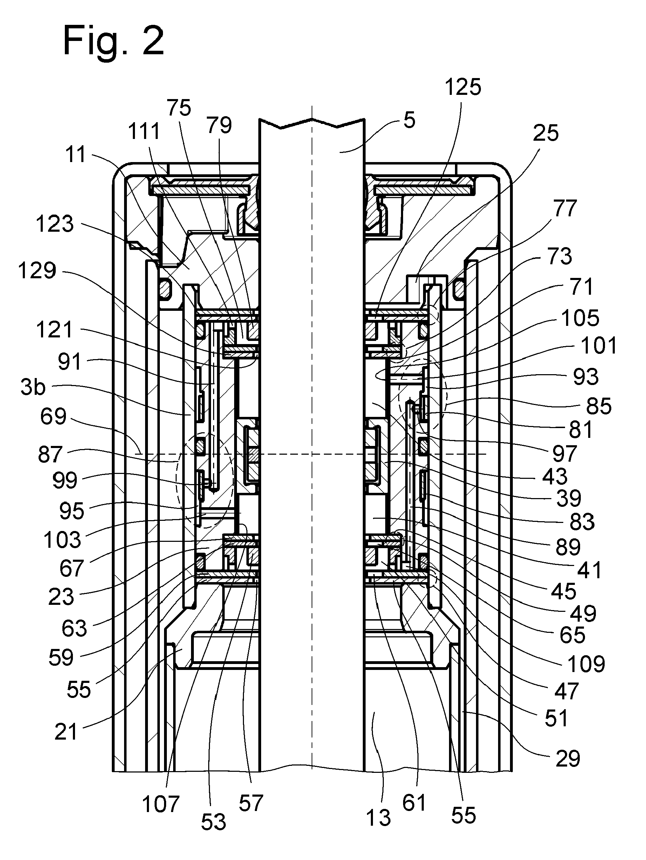

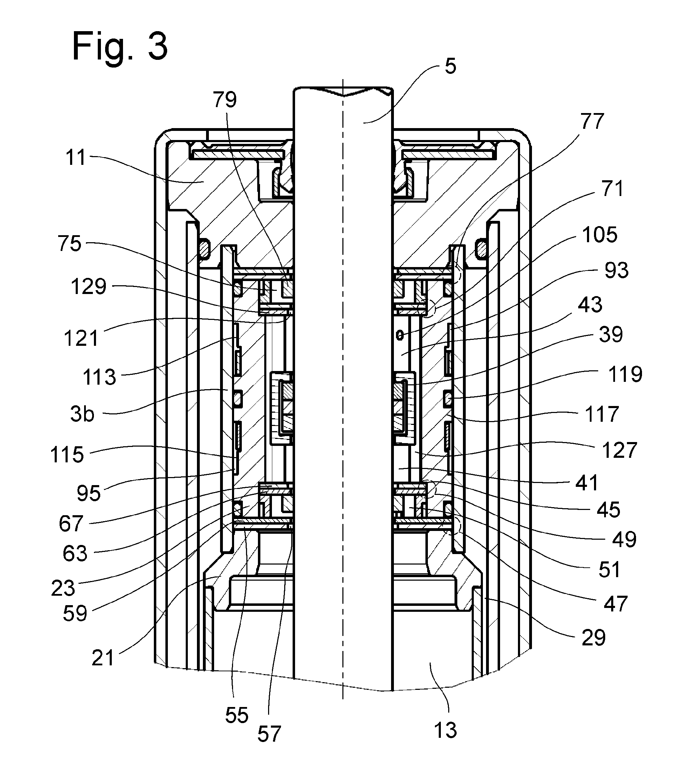

Die Figuren 2 und 3 beschränken sich in der Zusammenschau auf den zweiten Längenabschnitt 3b des Zylinders, wobei die beiden Figuren 2 und 3 verschiedene Schnittebene zeigen. Innerhalb der Ventilhülse 23 ist ein Ventilring 39 angeordnet, der mit der Kolbenstange 5 in Reibkontakt steht. Der Ventilring 39 begrenzt zwei Arbeitskammern 41; 43 innerhalb der Ventilhülse 23. Zwischen dem Adapterring 21 und einem unteren Absatz 45 der Ventilhülse 23 sind zwei Ventilscheibenpaare 47; 49 mit Abstand zueinander angeordnet. Diese Ventilscheibenpaare bilden einen ersten Vorraum 51, in dem ein erster Schaltring 53 eine axiale Schaltbewegung ausführen kann.

Eine erste dem kolbenstangenseitigen Arbeitsraum 13 zugewandte Ventilscheibe 55 des ersten Ventilscheibenpaares 47 verfügt über eine geschlossene Ringfläche, die mit ihrem Innendurchmesser zusammen mit der Kolbenstange 5 einen Ringspalt 57 bildet, der im geöffneten Betriebszustand einen zumindest nahezu ungedrosselten Zufluss von Dämpfmedium in den ersten Vorraum 51 gestattet. Auf dieser geschlossenen Ventilscheibe ist eine Voröffnungsventilscheibe 59 in Richtung der Ventilhülse 23 angeordnet. Diese Voröffnungsventilscheibe 59 weist im Vergleich zur ersten Ventilscheibe 55 einen deutlich kleineren Innendurchmesser auf, so dass nur ein minimaler Ringspalt zur Kolbenstange 5 vorliegt. Ausgehend vom Innendurchmesser erstreckt sich in der Voröffnungsventilscheibe 59 eine kleine radiale Aussparung 61 (Fig. 2), die einen durch die Spaltbreite und die Materialstärke der Voröffnungsscheibe wirksamen Voröffnungsquerschnitt bestimmt. An dem unteren Absatz 45 ist das zweite Ventilscheibenpaar 49 spiegelbildlich zum ersten Schaltring 53 angeordnet, d. h. ausgehend vom ersten Vorraum 51 eine zweite Voröffnungsscheibe 63 mit Aussparung 65 und einer aufgelegter geschlossener Ventilscheibe 67. Die gesamte Ventilhülse 23 ist spiegelbildlich zu ihrer Querachse 69 ausgeführt, so dass an einem oberen Absatz 71 ein drittes Ventilscheibenpaar 73 durch einen zweiten Vorraum 75 von einem vierten Ventilscheibenpaar 77 getrennt ist. In dem zweiten Vorraum 75 ist ein zweiter Schaltring 79 axial beweglich zwischen dem dritten 73 und dem vierten Ventilscheibenpaar 77 angeordnet. Beide Schaltringe 53; 75 stehen in Reibkontakt mit der Kolbenstange 5 und führen in den axialen Grenzen der Vorräume 51; 75 eine Synchronbewegung mit der Kolbenstangenbewegung aus.

Innerhalb der Ventilhülse 23 ist jeweils eine Arbeitskammer 41; 43 über mindestens einen über ein Rückschlagventil 81; 83 gesteuerten Kanal 85; 87 mit einem der Arbeitsräume 13; 15 im Zylinder 3 verbunden. Die Arbeitskammer 43 zwischen dem Ventilring 39 und der Kolbenstangenführung 11 ist über den zweiten Vorraum 75 und dem Spalt 25 in der Kolbenstangenführung 11 und der Fluidverbindung 29 an den kolbenstangenfernen Arbeitsraum 15 angeschlossen. Die Arbeitskammer 41 zwischen dem ersten Vorraum 51 und dem Ventilring 39 ist mit dem kolbenstangenseitigen Arbeitsraum 13 verbunden.

Die Kanäle 85; 87 sind als kombinierte Axial- 89; 91; 93; 95 und Radialkanäle 97; 99; 101; 103 in der Ventilhülse 23 ausgeführt. Die Radialkanäle 101; 103 münden jeweils mit einer Ventilöffnung 105; 107 in einer Arbeitskammer 41; 43 und werden über die Stellung des Ventilrings 39 innerhalb der Ventilhülse 23 angesteuert, d. h. geöffnet oder geschlossen, wobei die Stellung des Ventilrings 23 wiederum von der Kolbenstangenbewegung abhängt. Ausgehend vom einem Querkanal 109; 111, der am ersten 67 und zweiten Vorraum 51; 75 ansetzt, erstreckt sich der sacklochförmige Axialkanal 89; 91, dem sich nach radial außen ein weiterer Radialkanal 97; 99 anschließt.

Teilabschnitte 93; 95 der kombinierten Axial-Radialkanäle 85; 87 werden von Mantelflächen 113; 115 der Ventilhülse 23 und dem die Ventilhülse 23 umschließenden Zylinderabschnitt 3b gebildet. An den Übergängen von den Radialkanälen 97; 99 zu den Axialkanälen 93; 95 sind auf den Mantelflächen 113; 115 ein Rückschlagventile 81; 83 in der Form eines radial elastischen Bandes ausgeführt. Diese Rückschlagventile 81; 83 beschränken die Durchflussrichtung des jeweiligen Kanals auf eine Strömung von einem der Arbeitsräume in die zugehörige Arbeitskammer der Ventilhülse 23. Die umgekehrte Strömungsrichtung wird durch die Rückschlagventile 81; 83 blockiert.

Wie schon mehrfach erwähnt, verlaufen die Kanäle 85; 87 durch die spiegelbildliche Ausgestaltung der Ventilhülse 23 ebenfalls spiegelbildlich, so dass die Ventilhülse 23 sowohl in Umfangsrichtung aber auch um die Querachse 69 beliebig im zweiten Zylinderabschnitt 3b montiert werden kann. Auf der halben Ventilhülsenlänge ist in einem umlaufenden Ringsteg 117 eine Ringdichtung 119 gekammert, die im Zusammenwirken mit dem zweiten Längenabschnitt 3b des Zylinders die beiden Kanäle 85; 87 im Bereich der Rückschlagventile 81; 83 voneinander druckdicht trennt.

Die Figuren 2 und 3 zeigen den Schwingungsdämpfer 1 bei einer Kolbenstangenausfahrbewegung, bei der Dämpfmedium von dem Kolben 7 aus dem kolbenstangenseitigen Arbeitsraum 13 in den ersten Vorraum 51 gefördert wird. Der erste Schaltring 53 liegt an der Unterseite der zweiten Voröffnungsscheibe 63 an, so dass nur ein geringer Volumenstrom in die untere Arbeitskammer 41 einströmen kann. Die Voröffnungsscheibe 63 stellt mittels der Aussparung 65 eine Drosseleinrichtung dar, so dass bei dem Dämpfmediumübertritt von dem ersten Vorraum 51 in die untere Arbeitskammer 41 ein Druckabfall auftritt. Der Strömungsweg durch die zweite Voröffnungsscheibe 63 stellt eine Bypassverbindung zu dem Kanal 85 zwischen dem ersten Vorraum 51 und der Ventilöffnung 105 in der oberen Arbeitsammer 43 dar. In den Fig. 2 und 3 ist erkennbar, dass das Rückschlagventil 97 von der Mantelfläche 113 der Ventilhülse 23 abgehoben ist und den Strömungsweg zur oberen Arbeitkammer 43 freigegeben ist. Das Dämpfmedium kann von dem kolbenstangenseitigen Arbeitsraum 13 und der oberen Arbeitskammer 43 durch einen maximal geöffneten Ringspalt 121 des dritten Ventilscheibenpaars 101 in den zweiten Vorraum 75 fließen. Das vierte Ventilscheibenpaar 77 wirkt jedoch ausgehend vom zweiten Vorraum 75 in Abflussrichtung zum benachbarten Arbeitsraum 15, d. h. in diesem Fall dem kolbenstangenfernen Arbeitsraum 15, als Drosseleinrichtung, da der zweite Schaltring 79 an einer Voröffnungsventilscheibe 123 mit einer Aussparung 125 anliegt. Der durch die Aussparung 125 gebildete Voröffnungsquerschnitt bestimmt die Dämpfkraft des Schwingungsdämpfers.

Zumindest bei einer über die axiale Länge der beiden Arbeitskammern 41; 43 hinausgehenden Kolbenstangenbewegung verschließt der Ventilring mit seiner äußeren Mantelfläche die Ventilöffnung 105, so dass bis auf einen u. U. auftretende Leckstrom kein Dämpfmedium über den Kanal 85 vom kolbenstangenseitigen Arbeitsraum 13 in die obere Arbeitskammer 43 strömen kann. Über die besagte Bypassverbindung vom ersten Vorraum 51 entlang des zweiten Ventilscheibenpaars 49 in der unteren Arbeitskammer 41 strömt Dämpfmedium, das über axiale Nuten 127 (Fig.3) in der innenwandung der Ventilhülse 23 auch in die obere Arbeitskammer 43 gelangt. Dieser Bypassvolumenstrom wirkt sich auf die Dämpfkraftkennlinie nicht signifikant aus. Ist der Ventilring 39 jedoch mit seiner Oberseite an der Unterseite des dritten Ventilscheibenpaars 73 angeschlagen, dann übt der Bypassvolumenstrom eine Druckkraft auf die Unterseite des Ventilrings 39 eine zusätzliche Verschließkraft auf den Ventilring aus, so dass der Ringspalt 121 zwischen der dritten Ventilscheibe 129 und der Kolbenstange 5 dicht verschlossen wird. Ab dieser Hublage bzw. der Amplitude der Kolbenstange 5 muss das gesamte komprimierte Dämpfmediumvolumen durch das Kolbenventil 17 in den kolbenstangenfernen Arbeitsraum 15 fließen (Fig. 1), da das Rückschlagventil 83 einen Volumenstrom von der unteren Arbeitskammer 41 über die freie Ventilöffnung 107 und den Kanal 87 in den zweiten Vorraum 75 verhindert.

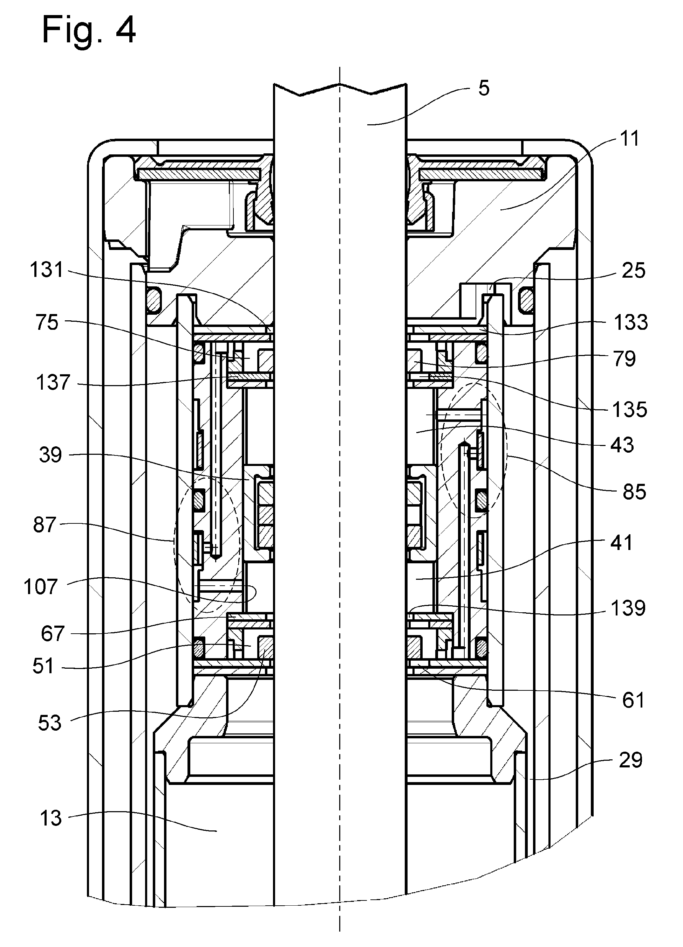

Die Fig. 4 zeigt eine Momentanposition des Ventilrings 39 und der Schaltringe 53; 79 bei einer Kolbenstangeneinfahrbewegung. Dabei wird Dämpfmedium von dem Kolben 7 über die Verbindungsöffnung 27 im ersten Zylinderabschnitt 3a (Fig. 1) in die Fluidenverbindung 29 verdrängt, so dass das Dämpfmedium über den Spalt 25 in der Kolbenstangenführung 11 durch einen geöffneten Ringspalt 131 einer vierten Ventilscheibe 133 in den zweiten Vorraum 75 einströmt. Der Strömungsweg durch die kombinierten Axial- und Radialkanäle 85; 87 entspricht sinngemäß der Beschreibung zu den Fig. 2 und 3, wobei der Abfluss aus dem ersten Vorraum 51 in den kolbenstangenseitigen Arbeitsraum 13 gedrosselt wird, da nur die Aussparung 61 als Abflussquerschnitt zur Verfügung steht. Parallel dazu wird der Zustrom von Dämpfmedium aus dem zweiten Vorraum 75 in die obere Arbeitskammer 43 durch das Zusammenwirken des zweiten Schaltrings 79 mit einer Aussparung 135 in einer vierten Voröffnungsscheibe 137 gedrosselt. Ab einer bestimmten Hublage der Kolbenstange 5 bzw. des Ventilrings 39 wird die Ventilöffnung 107 in die untere Arbeitskammer 41 sowie zusätzlich der Abfluss durch einen Ringspalt 139 der zweiten Ventilscheibe 67 verschlossen.

## Patentansprüche

1. Schwingungsdämpfer, umfassend einen Zylinder, in dem eine Kolbenstange axial beweglich geführt ist, wobei die Kolbenstange mit einem Kolben verbunden ist, der den Zylinder in einen kolbenstangenfernen und einen kolbenstangenseitigen Arbeitsraum unterteilt, wobei im kolbenstangenseitigen Arbeitsraum auf der Kolbenstange ein Ventilring gleitend gelagert ist, der in Abhängigkeit seiner Axialposition eine Ventilöffnung zum Abfluss von Dämpfmedium in ihrem Querschnitt beeinflusst,
**dadurch gekennzeichnet,**
**dass** im kolbenstangenseitigen Arbeitsraum (13) eine Ventilhülse (23) angeordnet ist, in der der Ventilring (39) axial beweglich geführt ist, der zwei Arbeitskammern (41; 43) innerhalb der Ventilhülse (23) begrenzt, wobei der kolbenstangenseitige Arbeitsraum (13) und der kolbenstangenferne Arbeitsraum (15) jeweils mit einer Arbeitskammer (41; 43) der Ventilhülse (23) über mindestens einen über ein Rückschlagventil (81; 83) gesteuerten Kanal (85; 87) verbunden sind und der Ventilring (39) jeweils eine Ventilöffnung (105; 107) zwischen einem Kanal (85; 87) und einer darin mündenden Arbeitskammer (41; 43) ansteuert.

2. Schwingungsdämpfer nach Anspruch 1,
**dadurch gekennzeichnet,**
**dass** der Zylinder (3) mit einem äußeren Rohrkörper (31) eine Fluidverbindung (29) bildet, die einen der Arbeitsräume (13; 15) mit einer Arbeitskammer (41; 43) in der Ventilhülse (23) verbindet.

3. Schwingungsdämpfer nach Anspruch 1,
**dadurch gekennzeichnet,**
**dass** den Kanälen (85; 87) jeweils eine Bypassverbindung (51; 75) mit einer Drosseleinrichtung (65; 135) zugeordnet ist.

4. Schwingungsdämpfer nach Anspruch 3,
**dadurch gekennzeichnet,**
**dass** die Bypassverbindung und der mindestens eine Kanal (85; 87) über einen Vorraum (51; 75) miteinander verbunden sind, wobei zwischen dem Vorraum (51; 75) und der Bypassverbindung die Drosseleinrichtung (65; 135) angeordnet ist.

5. Schwingungsdämpfer nach Anspruch 3,
**dadurch gekennzeichnet,**
**dass** die Drosseleinrichtung (65; 135) über einen durch die Bewegung der Kolbenstange reibkraftbetätigten Schaltring (53; 79) angesteuert wird.

6. Schwingungsdämpfer nach Anspruch 4,
**dadurch gekennzeichnet,**
**dass** der Vorraum (51; 75) in Abflussrichtung zum benachbarten Arbeitsraum (13; 15) eine zweite Drosseleinrichtung (61; 125) aufweist.

7. Schwingungsdämpfer nach Anspruch 1,
**dadurch gekennzeichnet,**
**dass** die Kanäle (85; 87) als kombinierte Axial-Radialkanäle in der Ventilhülse (23) ausgeführt sind, wobei an einem Übergang von einem Radial- zu einem Axialkanal (93; 95) das Rückschlagventil (81; 83) in Form eines elastischen Bandes ausgeführt ist.

8. Schwingungsdämpfer nach Anspruch 1,
**dadurch gekennzeichnet,**
**dass** ein Teilabschnitt (93; 95) des Kanals (85; 87) von einer Mantelfläche (113; 115) der Ventilhülse (23) und einem die Ventilhülse (23) umschließenden Zylinderabschnitt (3b) gebildet wird.

9. Schwingungsdämpfer nach Anspruch 1,
**dadurch gekennzeichnet,**
**dass** die Ventilhülse (23) bezogen auf eine Querachse (69) spiegelbildlich ausgeführt ist.
